# EUROPEAN PATENT SPECIFICATION

(11) **EP 2 169 686 B1**
(45) Date of publication and mention of the grant of the patent: **07.12.2011**
(21) Application number: 09170402.3
(22) Date of filing: 16.09.2009
(51) Int. Cl.: G21C 19/307, C02F 1/00

(54) **Replacement basket, a system using the replacement basket, and a method for loading the replacement basket**
Ersatzkorb, System, das diesen verwendet und Verfahren zum Einlegen eines Ersatzkorbs
Panier de rechange, système utilisant le panier de rechange, et procédé de chargement du panier de rechange

(30) Priority: 25.09.2008 US 232853
(43) Date of publication of application: 31.03.2010
(73) Proprietor: GE-Hitachi Nuclear Energy Americas LLC, Wilmington, NC 28401 (US)
(72) Inventor: Caine, Thomas Alfred, Santa Clara, CA 95121 (US); Varela, Juan Alberto, Santa Clara, CA 95123 (US); Tran, Luong Cam, Santa Clara, CA 95139 (US)
(74) Representative: Gray, Thomas

(56) References cited:
- WO-A-03/055810
- JP-A- 9 070 594
- JP-A- 2007 033 352
- US-A- 6 039 866
- US-B1- 6 270 664
- DATABASE WPI Week 198506 Thomson Scientific, London, GB; AN 1985-034538 XP002562553 -& JP 59 228195 A (JGC CORP) 21 December 1984 (1984-12-21)

## Description

### BACKGROUND

### 1. Field

Example embodiments relate to an apparatus for holding a bed of zinc pellets, and more particularly, a replacement basket for holding a bed of zinc pellets through which reactor feedwater may pass. Example embodiments also relate to a system including the apparatus and a method of filling the apparatus with zinc pellets.

### 2. Description of the Related Art

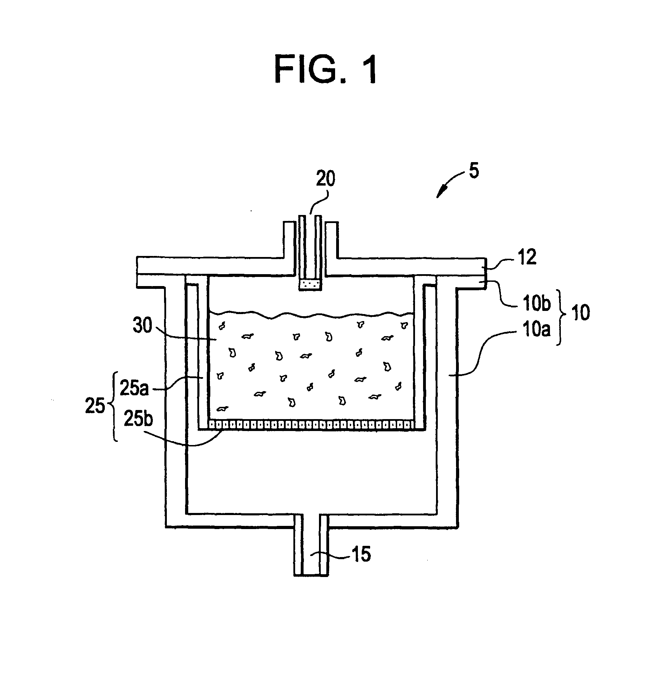

In conventional boiling water reactors, zinc may be added to the reactor feedwater to reduce the levels of radioactivity in the reactor piping. In many conventional boiling water reactors, zinc is introduced into the feedwater by a zinc feedwater system. FIG. 1 is a schematic view of a conventional zinc feedwater system 5. The zinc feedwater system 5 may generally includes a pressure vessel 10 with piping 15 leading into the pressure vessel 10 and piping 20 leading out of the pressure vessel 10. The pressure vessel may include a body 10a with a flange 10b and a cover 12. The zinc feedwater system 5 also includes a zinc feedwater basket 25 within the pressure vessel 10 for holding a bed of zinc pellets 30. A conventional zinc feedwater basket 25 includes a vertical wall 25a and a perforated plate bottom 25b. The zinc feedwater system 5 also includes a flow control valve (not shown) attached to the piping 20 leaving the pressure vessel through the cover 12.

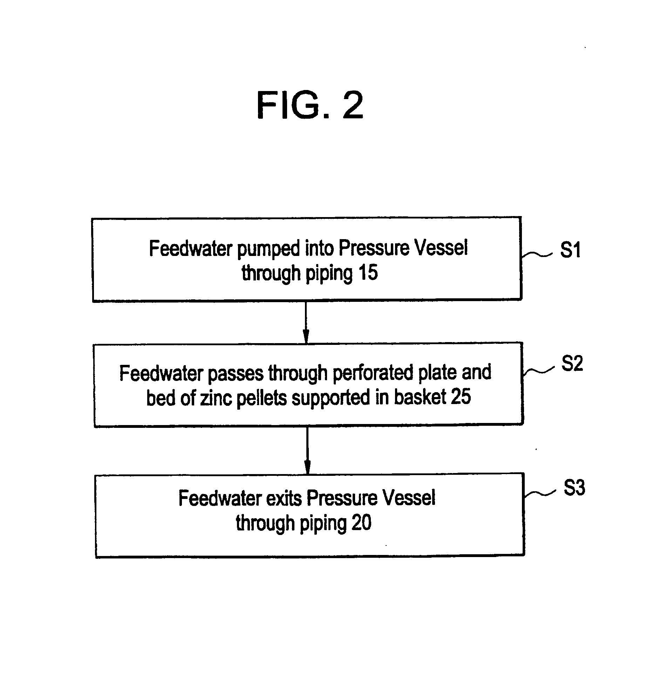

FIG. 2 is a flowchart illustrating a method of the flowing feedwater through the zinc feedwater system. Feedwater is pumped into the pressure vessel 10 through the piping 15 in step S1. The feedwater passes upward through the perforated bottom plate 25b and the bed of zinc pellets 30 supported in the basket 25 in step 2. Feedwater passes from the bed of zinc pellets 30 and into the outlet piping 20 in step 3. Feedwater may leave the zinc feedwater system via the outlet piping 20.

It has been observed that when the rate of flow of feedwater passing through the bed of zinc pellets 30 is relatively high, the pellets tend to move in a fluidized manner. This fluidization increases the possibility of pellet chipping and subsequent introduction of zinc particles into the reactor. From an operational standpoint, large intrusions of zinc into the feedwater, due to these particles, may cause unexpected spikes in feedwater zinc concentrations which are undesirable for fuel.

### SUMMARY

Example embodiments provide a replacement basket (a downward flow basket) which may house a bed of pellets and allow for a fluid to pass through the bed of pellets in a downward direction. Because the direction of fluid flow in the replacement basket is downward, the downward flow may prevent the bed from fluidizing, minimizing the chipping of zinc pellets. Example embodiments also provide for a method of providing pellets into the basket. Example embodiments also provide for a system using the basket.

According to example embodiments, a downward flow basket may include at least one vertical wall with an upper surface portion and a lower surface portion, at least one vertical wall including at least one hole near the upper surface portion. The downward flow basket, in accordance with example embodiments, may also include a solid bottom attached to the lower surface portion of the at least one vertical wall, the bottom and at least one vertical wall enclosing an inner space of the basket. According to example embodiments, a downward flow basket may also include a perforated plate above the bottom of the downward flow basket and within the inner space of the basket, the perforated plate and the bottom may define a plenum into which fluid exiting the pellets may flow. According to example embodiments, a downward flow basket may also include a central pipe extending from the plenum up through the downward flow basket.

According to example embodiments, a system may include a pressure vessel and the above described downward flow basket, wherein the downward flow basket is located inside the pressure vessel. According to example embodiments, the pressure vessel may include a top flange that may be a stepped flange. According to example embodiments, the top of the downward flow basket may be configured to contact the stepped portion of the stepped flange.

According to example embodiments, a method of loading pellets into the above described downward flow basket may include blocking the central pipe of the basket and pouring pellets around the blocked central pipe and into the basket to fill the inner space of the basket. According to example embodiments, the central pipe may be blocked with a tool and the tool may include a funnel configured to guide the pellets into the basket.

### BRIEF DESCRIPTION OF THE DRAWINGS

There follows a detailed description of embodiments of the invention by way of example only with reference to the accompanying drawings, in which:
FIG. 1 is a schematic view of a conventional zinc feedwater system including a conventional flow basket for holding zinc pellets;
FIG. 2 is a flowchart illustrating a method of flowing feedwater through a conventional zinc feedwater system;
FIG. 3A is a top schematic view of a downward flow basket according to example embodiments;
FIG. 3B is a section view of the downward flow basket illustrated in FIG. 3A;
FIG. 3C is a section view of the downward flow basket illustrated in FIG. 3B;
FIG. 3D is an elevation view of the vertical wall from c-c' as shown in FIG. 3A and from z-z' as shown in FIG. 3B.
FIG. 4A is a view of a meshed hole in a vertical wall in the downward flow basket according to example embodiments;
FIG. 4B is a view of a meshed hole in a vertical wall in the downward flow basket according to example embodiments;
FIG. 4C is a view of a meshed hole in a vertical wall in the downward flow basket according to example embodiments;
FIG 4D is a view of an open hole in a vertical wall in the downward flow basket according to example embodiments;
FIG. 5 is a view illustrating a flow pattern of feedwater through a conventional zinc feedwater system using a conventional flow basket;
FIG. 6 is a view illustrating a flow pattern of feedwater through a conventional zinc feedwater system using a downward flow basket according to example embodiments;
FIG. 7 is a view illustrating a method for pellet reloading in a downward flow basket according to example embodiments.

### DETAILED DESCRIPTION OF EXAMPLE EMBODIMENTS

Example embodiments will now be described more fully with reference to the accompanying drawings, in which example embodiments are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. In the drawings, the sizes of components may be exaggerated for clarity.

It will be understood that when an element or layer is referred to as being "on", "connected to", or "coupled to" another element or layer, it can be directly on, connected to, or coupled to the other element or layer or intervening elements or layers that may be present. In contrast, when an element is referred to as being "directly on", "directly connected to", or "directly coupled to" another element or layer, there are no intervening elements or layers present. As used herein, the term "and/or" includes any and all combinations of one or more of the associated listed items.

It will be understood that, although the terms first, second, etc. may be used herein to describe various elements, components, regions, layers, and/or sections, these elements, components, regions, layers, and/or sections should not be limited by these terms. These terms are only used to distinguish one element, component, region, layer, and/or section from another element, component, region, layer, and/or section. Thus, a first element, component, region, layer, or section discussed below could be termed a second element, component, region, layer, or section without departing from the teachings of example embodiments.

Spatially relative terms, such as "beneath", "below", "lower", "above", "upper", and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

Embodiments described herein will refer to plan views and/or cross-sectional views by way of ideal schematic views. Accordingly, the views may be modified depending on manufacturing technologies and/or tolerances. Therefore, example embodiments are not limited to those shown in the views, but include modifications in configuration formed on the basis of manufacturing processes. Therefore, regions exemplified in figures have schematic properties and shapes of regions shown in figures exemplify specific shapes or regions of elements, and do not limit example embodiments.

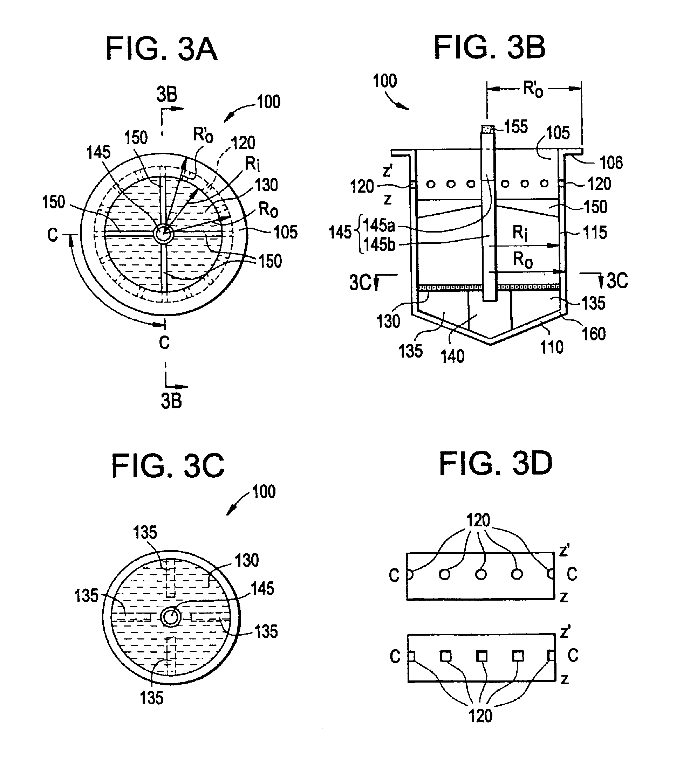

Example embodiments will now be described more fully hereinafter with reference to FIGS. 3A-3D, 4A-4D, 6 and 7, in which example embodiments are shown. Example embodiments may, however, be embodied in different forms and should not be construed as limited to the embodiments set forth herein. Rather, example embodiments are provided so that this disclosure will be thorough and complete, and will fully convey the scope of example embodiments to those skilled in the art. Like numbers refer to like elements throughout the specification.

The downward flow basket, according to example embodiments, may include a bottom 110, and at least one vertical wall 115 connected to the bottom 110. The vertical wall 115, as shown in FIGS. 3A-3C, may be a vertically oriented and cylindrically shaped wall with an inside radius Ri and an outside radius Ro. The vertical wall, 115 may include an upper surface portion 105 and a lower surface portion 160. The upper surface portion 105 of the vertical wall 115 may include a flange 106. As shown in FIGS. 3A - 3B, the flange 106 may be a relatively short vertically oriented and cylindrically shaped flange with an inside radius equal to the outside radius Ro of the vertical wall 115 and an outside radius Ro' larger than the outside radius Roof the vertical wall 115. As shown in FIG. 3A, the centerline of the top flange 106 and the centerline of the vertical wall 115 may be coincident. Furthermore, as shown in FIG. 3B, the top of the flange 106 may be coincident with the top of the vertical wall 115.

The bottom of the downward flow basket 110 may be shaped in a variety of configurations to redirect fluid flow towards the vertical wall 115. Referring to FIG. 3B, the bottom of the downward flow basket 110 may, for example, be cone shaped. The base of the cone shaped bottom 110 may connect to the lower surface portion 160 of the vertical wall 115 which may be coincident with the bottom of the vertical wall 115. The vertex of the cone shaped bottom 110 may be directed downwards and away from vertical wall 115 and the vertex may be coincident with the centerline of the vertical wall 115. The outer radius of the base of the cone shaped bottom 110, in accordance with example embodiments, may be equal to the outer radius Ro of the vertical wall 115. The thickness of the bottom 110 may be equal to the thickness of the vertical wall 115. However, example embodiments are not limited thereto. For example, the thickness of the bottom 110 may be thicker than the thickness of the wall 115 or the thickness of the bottom 110 may be thinner than the thickness of the wall 115. Furthermore, although FIG. 3B illustrates a cone-shaped bottom, example embodiments are not limited thereto. For example, the bottom could be a hemisphere, or a geometric shape with an elliptical or parabolic profile, or it could be flat.

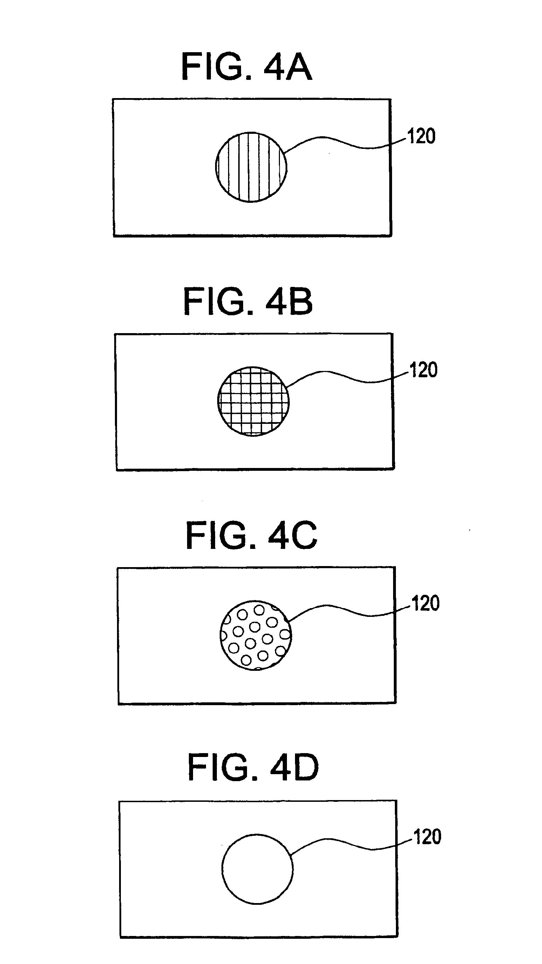

The vertical wall 115 may include holes 120 near the top of the vertical wall 115. The holes 120, for example, may be circular holes or rectangular holes, as illustrated in FIG. 3D, and may be positioned symmetrically around the perimeter of vertical wall 115. However, the holes 120 are not limited to these shapes. The holes are configured to allow feedwater to pass from the outside of the vertical wall 115 to the inside of the downward flow basket 100. A mesh (not shown) may be provided over the hole in order to prevent contaminates from entering the downward flow basket 100. The mesh may be provided either on the inside of the vertical wall 115 and/or the outside of the vertical wall 115. In the alternative, the holes may be constructed such that the mesh is integral with the wall. Examples of meshed holes and open holes are illustrated in FIGS. 4A-4D.

Inside the downward flow basket 100, according to example embodiments, zinc pellets 125 may be stored. The zinc pellets may be vertically supported by a perforated plate 130 and horizontally restrained by the vertical wall 115. The perforated plate may be positioned in the inside of the downward flow basket 100 above the bottom 110. The perforated plate 130 may be formed as an annular plate such that the thickness of the plate is aligned in the vertical direction and the center of the plate is aligned with the center of the vertical wall 115. The outer radius of the annular perforated plate 130 may be equal to or less than the inside radius Ri of the vertical wall 115. The inner radius of the annular perforated plate may be equal to or larger than the outer diameter of a discharge pipe 145 (to be discussed later). The space between the perforated plate 130 and the bottom 110 constitutes a plenum 140 between the perforated plate 130 and the bottom 110.

The perforated plate 130 may be attached to and/or supported by the vertical wall 115 and/or may be supported by vertically oriented support braces 135. The support braces 135 may be attached to the vertical wall and/or the bottom 110 of the downward flow basket and may be arranged symmetrically around the center of the downward flow basket as shown in FIG. 3C. Although FIG. 3C shows four symmetrically placed braces 135, example embodiments are not limited thereto.

The bottom of the support braces may be supported by the bottom 110 of the downward flow basket 100 and formed to match the contour of the bottom 110. For example, if the bottom 110 of the downward flow basket 100 is cone-shaped then the bottom of the support braces 135 may be angled to match the angle of the cone. However, example embodiments are not limited thereto. For example, the bottom of the support braces 135 could be curve shaped in the event the bottom 110 of the downward flow basket 100 had a curved profile. Although the support braces 135 illustrated in FIG. 3B appear solid, the support braces may include holes in order to allow fluid to pass through the support brace 135 instead of flowing around the support brace 135.

The downward flow basket, according to example embodiments, also may include a central pipe 145 extending from the plenum 140 up through the downward flow basket as shown in FIG. 3B. The outer radius of the central pipe 145 may be equal to or smaller than the inner radius of the annular perforated plate 130 as shown in FIG. 3C. The central pipe 145 may be a single pipe. In the alternative, the central pipe may be comprised of an upper flow tube 145a and a lower flow tube 145b and may be held together as a pipe-in-pipe arrangement.

The central pipe 145 may be supported by support braces 150. The support braces 150 may be attached to the inside surface of the vertical wall 115 and may be attached to the central pipe 145. The support braces 150 may be symmetrically positioned around the pipe as shown in FIGS. 3A and 3B. If the central pipe includes a lower flow tube 145b and an upper flow tube 145a, the lower flow tube may be supported by the support braces 150. A filter 155 may be located in the central pipe near the top of the downward flow basket 100. An additional filter (not shown) may also be placed near the bottom of the central pipe 145.

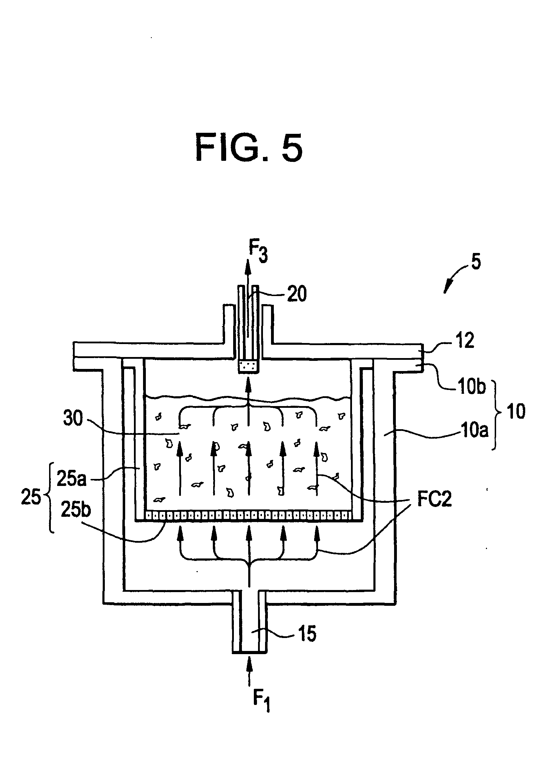

FIG. 5 describes the flow of feedwater in a zinc feedwater system using a conventional flow basket. As illustrated in FIG. 5, feedwater is fed into a pressure vessel 10 through a pipe 15. The flow of feedwater F1 into the pressure vessel 10 may spread and transform into pattern FC2 after entering the pressure vessel 10 but before passing through the perforated plate 25b. The flow of feedwater may pass through the perforated plate 25b and the bed of zinc pellets 30 and may leave the pressure vessel through the pipe 20. If the flow of feedwater is sufficiently low, the zinc pellets may remain in place and water may flow around the pellets. However, if the flow is sufficiently high, the forces exerted on the pellets by the feedwater may cause the pellets to displace and move with respect to each other. This movement, as explained above, can damage the zinc pellets causing particles to enter the reactor thereby adversely affecting the feedwater Zn control.

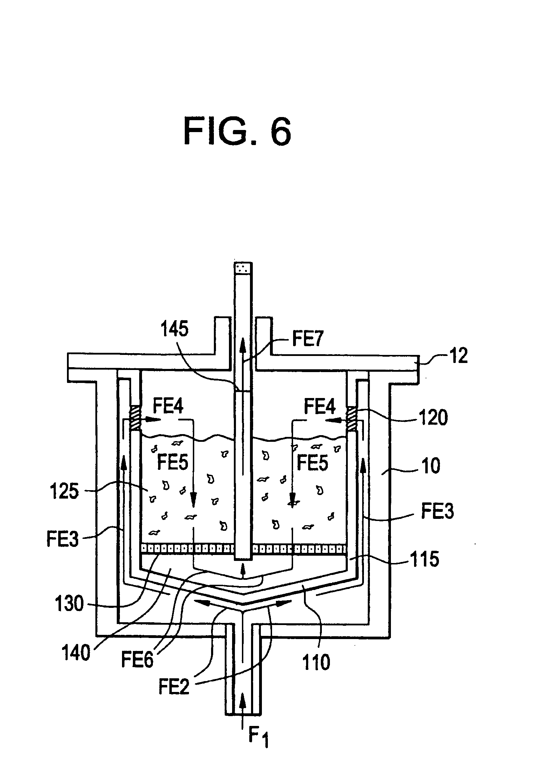

FIG. 6 describes the flow of feedwater through a zinc feedwater system using the downward flow basket in accordance with example embodiments. As above, feedwater may be fed into a pressure vessel at one end, however, in example embodiments, this flow is redirected by the bottom of the downward flow basket 110 to the outside of the vertical walls of the downward flow basket 115 (see FIG. 6, F for direction of feedwater into the pressure vessel, see FIG. 6, FE2 for the flow of water being redirected to the vertical wall 115 by the bottom of the downward flow basket 110). The feedwater may flow along the outside of the vertical wall of the downward flow basket 115 towards the top of the downward flow basket (see FIG. 6, FE3). Near the top of the downward flow basket, feedwater passes through the holes 120 in the vertical wall 115 and into the downward flow basket 100 (see FIG. 6, FE4). At the bottom of the downward flow basket 110 the feedwater may flow into the plenum 140, accordingly, the feedwater in the downward flow basket may flow in a downward direction, through the bed of zinc pellets 125, through a perforated plate 130, and into the plenum 140 (see FIG. 6, FE5). Once in the plenum, the feedwater may exit the downward flow basket by flowing up inside the central pipe 145 (see FIG. 6, FE6 and FE7).

According to example embodiments, because the direction of feedwater within the downward flow basket 100 is directed downwards, the flow of feedwater presses the zinc pellets 125 against the perforated plate 130 and the vertical wall 115. Accordingly, the force of water against the zinc pellets 125 compresses the pellets 125 reducing or preventing their fluidization.

In conventional flow baskets, zinc pellets may be placed into the flow basket by removing the cover of the pressure vessel 12 and pouring the zinc pellets 30 directly into the flow basket 25. However, according to example embodiments, because a central pipe 145 within the downward flow basket may be exposed when the pressure vessel cover 12 is removed, care must be taken to ensure the pellets do not enter the central pipe 145 during filling.

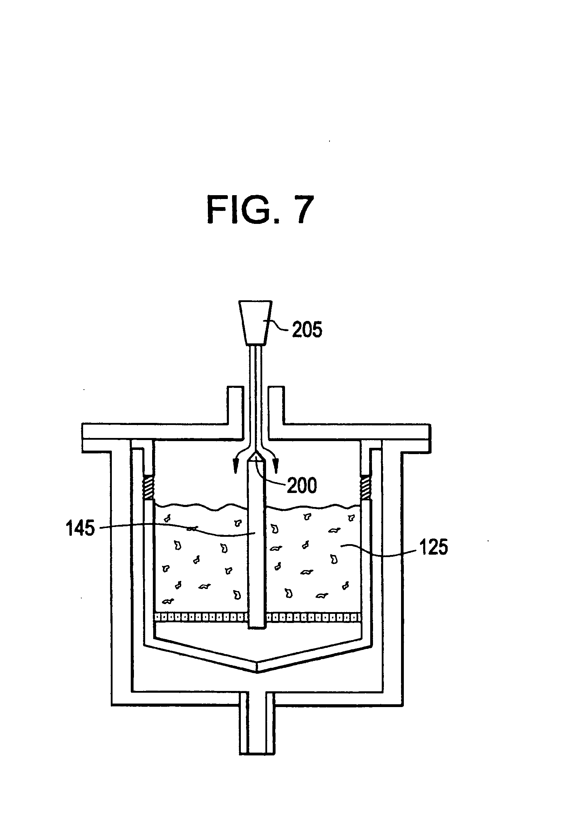

Referring to FIG. 7, a method for loading pellets into the downward flow basket according to example embodiments may include providing a blocker 200 to block a central pipe 145. According to example embodiments, a method for loading pellets into the downward flow basket may also include pouring the pellets into the downward flow basket around the blocked central pipe 145. According to example embodiments, a special tool may be used to block the central pipe. This tool may be configured to include a funnel 205 for guiding the pellets into the basket as shown in FIG. 7.

Although the configuration of the downward flow basket, according to example embodiments, is at least internally different from that of the conventional flow basket, the size of the downward flow basket may be similar to that of the conventional flow basket. Therefore, the downward flow basket, according to example embodiments, may be configured to replace the conventional flow basket in conventional zinc feedwater systems. For example, the pressure vessel, used in conjunction with the conventional flow basket, has a stepped flange in which the conventional flow basket mates. The downward flow basket 100, according to example embodiments, could likewise be configured so that the upper surface portion of the downward flow basket 105 mates with the stepped flange of a conventional pressure vessel in the same manner as the conventional flow basket. Thus, the downward flow basket may be used for retrofitting existing systems.

The downward flow basket may be made of materials identical to those of the conventional flow basket, for example, stainless steel. However, the downward flow basket could be made of any number of materials such as glass, plastic, ceramic, metal, or composite material.

While example embodiments have been particularly shown and described with reference to example embodiments thereof, it will be understood by those of ordinary skill in the an that various changes in form and details may be made therein without departing from the scope of the following claims.

## Claims

1. A basket (100) comprising:
at least one vertical wall (115) with an upper surface portion (105) and a lower surface portion (160), the at least one vertical wall (115) including at least one hole (120) near the upper surface portion (105);
a bottom (110) attached to the lower surface portion (160) of the at least one vertical wall (115), the bottom (110) and the at least one vertical wall (115) enclosing an inner space of the basket (100);
a perforated plate (130) above the bottom (110) and within the inner space of the basket (100), the perforated plate (130) and the bottom (110) defining a plenum (140) into which fluid flowing out of a pellet bed (125) may flow; and
a central pipe (145) extending from the plenum (140) up through the basket (100).

2. The basket (100) of claim 1, wherein the upper surface portion (105) of the at least one vertical wall (115) includes a flange (106).

3. The basket (100) of claim 1 or 2, wherein the bottom (110) has a flat, conical or elliptical profile.

4. The basket (100) of any of the preceding claims, wherein the central pipe (145) includes a filter (155) at a top of the central pipe (145).

5. The basket (100) of any of the preceding claims, wherein the central pipe (145) includes a filter at a bottom of the central pipe (145).

6. The basket (100) of any of the preceding claims, further comprising:
at least one support brace (150) configured to support the central pipe (145), wherein the at least one support brace (150) is attached to an inside surface of the at least one vertical wall (115).

7. The basket (100) of any of the preceding claims, wherein the central pipe (145) includes an upper flow tube (145a) and a lower flow tube (145b).

8. The basket (100) of claim 7, further comprising:
at least one support brace (150) configured to support the lower flow tube (145b), wherein the at least one support brace (150) is attached to an inside surface of the at least one vertical wall (115).

9. The basket of any of the preceding claims, further comprising:
at least one support brace configured to support the perforated plate, the at least one support brace contacting an upper surface of the bottom.

10. The basket of any of the preceding claims, wherein the perforated plate is configured to support a bed of pellets.

11. A system comprising:
a pressure vessel (10); and
a basket (100) disposed inside the pressure vessel (10), the basket (100) including,
at least one vertical wall (115) with an upper surface portion (105) and a lower surface portion (160), the at least one vertical wall (115) including at least one hole (120) near the upper surface portion (105);
a bottom (110) attached to the lower surface portion (160) of the at least one vertical wall (115), the bottom (110) and the at least one vertical wall (115) enclosing an inner space of the basket (100);
a perforated plate (130) above the bottom (110) and within the inner space of the basket (100), the perforated plate (130) and the bottom (110) defining a plenum (140) into which fluid flowing from a pellet bed (125) may flow; and
a central pipe (145) extending from the plenum (140) up through the basket (100).

12. The system of claim 11, wherein the pressure vessel includes a stepped flange and the upper surface portion of the at least one vertical wall is configured to contact a stepped portion of the stepped flange.

13. A method of loading pellets (125) into the basket (100) of claim 1, comprising:
blocking the central pipe (145) of the basket (100); and
pouring pellets (125) around the central pipe (145) and into the basket (100) to fill the inner space.

14. The method of claim 13, wherein the central pipe is blocked with a tool, the tool including a funnel configured to guide the pellets into the basket.

15. The method of claim 13 or 14, wherein a cover of a pressure vessel is removed to expose the basket prior to blocking the central pipe of the basket.

## Patentansprüche

1. Korb (10), aufweisend:
wenigstens eine vertikale Wand (115) mit einem oberen Oberflächenabschnitt (105) und einem unteren Oberflächenabschnitt (160), wobei die wenigstens eine vertikale Wand (115) wenigstens ein Loch (120) in der Nähe des oberen Oberflächenabschnittes (105) enthält;
einen Boden (110), der an dem unteren Oberflächenabschnitt (160) der wenigstens einen vertikalen Wand (115) angebracht ist, wobei der Boden (110) und die wenigstens eine vertikale Wand (115) einen Innenraum des Korbs (100) umschließen;
eine perforierte Platte (130) über dem Boden (110) und in dem Innenraum des Korbs (100), wobei die perforierte Platte (130) und der Boden (110) einen Sammelraum (140) definieren, in welchen aus einem Pellet-Bett (125) strömendes Fluid strömen kann; und
ein mittiges Rohr (145), das sich aus dem Sammelraum (140) nach oben durch den Korb (100) hindurch erstreckt.

2. Korb (100) nach Anspruch 1, wobei der obere Oberflächenabschnitt (105) der wenigstens einen vertikalen Wand (115) einen Flansch (106) enthält.

3. Korb (100) nach Anspruch 1 oder 2, wobei der Boden (110) ein ebenes, konisches oder elliptisches Profil hat.

4. Korb (100) nach einem der vorstehenden Ansprüche, wobei das mittige Rohr (145) ein Filter (155) an einer Spitze des mittigen Rohres (145) enthält.

5. Korb (100) nach einem der vorstehenden Ansprüche, wobei das mittige Rohr (145) ein Filter an einem Boden des mittigen Rohres (145) enthält.

6. Korb (100) nach einem der vorstehenden Ansprüche, ferner aufweisend:
wenigstens eine Stützhalterung (150), die dafür eingerichtet ist, das mittige Rohr (145) zu unterstützen, wobei die wenigstens eine Stützhalterung (150) an einer Innenoberfläche der wenigstens einen vertikalen Wand (115) angebracht ist.

7. Korb (100) nach einem der vorstehenden Ansprüche, wobei das mittige Rohr (145) ein oberes Strömungsrohr (145a) und ein unteres Strömungsrohr (145b) enthält.

8. Korb (100) nach Anspruch 7, ferner aufweisend:
wenigstens eine Stützhalterung (150), die dafür eingerichtet ist, das untere Strömungsrohr (145b) zu unterstützen, wobei die wenigstens eine Stützhalterung (150) an einer Innenoberfläche der wenigstens einen vertikalen Wand (115) angebracht ist.

9. Korb nach einem der vorstehenden Ansprüche, ferner aufweisend:
wenigstens eine Stützhalterung, die dafür eingerichtet ist, die perforierte Platte zu unterstützen, wobei die wenigstens eine Stützhalterung eine Oberseite des Bodens berührt.

10. Korb nach einem der vorstehenden Ansprüche, wobei die perforierte Platte dafür eingerichtet ist, ein Pellet-Bett zu unterstützen.

11. System, aufweisend:
einen Druckbehälter (10); und
einen Korb (100), der im Inneren des Druckbehälters (10) angeordnet ist, wobei der Korb (10) enthält:
wenigstens eine vertikale Wand (115) mit einem oberen Oberflächenabschnitt (105) und einem unteren Oberflächenabschnitt (160), wobei die wenigstens eine vertikale Wand (115) wenigstens ein Loch (120) in der Nähe des oberen Oberflächenabschnittes (105) enthält;
einen Boden (110), der an dem unteren Oberflächenabschnitt (160) der wenigstens einen vertikalen Wand (115) angebracht ist, wobei der Boden (110) und die wenigstens eine vertikale Wand (115) einen Innenraum des Korbs (100) umschließen;
eine perforierte Platte (130) über dem Boden (110) und in dem Innenraum des Korbs (100), wobei die perforierte Platte (130) und der Boden (110) einen Sammelraum (140) definieren, in welchem aus einem Pellet-Bett (125) strömendes Fluid strömen kann; und
ein mittiges Rohr (145), das sich aus dem Sammelraum (140) nach oben durch den Korb (100) hindurch erstreckt.

12. System nach Anspruch 11, wobei der Druckbehälter einen stufenartigen Flansch enthält, und der obere Oberflächenabschnitt der wenigstens einen vertikalen Wand so eingerichtet ist, dass er einen stufenförmigen Abschnitt des stufenförmigen Flansches berührt.

13. Verfahren zum Laden von Pellets (125) in den Korb (100) nach Anspruch 1, mit den Schritten:
Blockieren des mittigen Rohres (145) der Korbs (100); und
Einfüllen von Pellets (125) um das mittige Rohr (145) und in den Korb (100), um den Innenraum zu füllen.

14. Verfahren nach Anspruch 13, wobei das mittige Rohr mit einem Werkzeug blockiert wird, und das Werkzeug einen Trichter enthält, der dafür eingerichtet ist, die Pellets in den Korb zu führen.

15. Verfahren nach Anspruch 13 oder 14, wobei eine Abdeckung eines Druckbehälters entfernt wird, um den Korb vor dem Blockieren des mittigen Rohres des Korbs freizulegen.

## Revendications

1. Panier (100) comprenant :
au moins une paroi verticale (115) avec une partie formant surface supérieure (105) et une partie formant surface inférieure (160), la/les parois verticales (115) comportant au moins un trou (120) près de la partie formant surface supérieure (105) ;
un fond (110) fixé à la partie formant surface inférieure (160) de la/des parois verticales (115), le fond et la/les parois verticales (115) englobant un espace intérieur du panier (100) ;
une plaque perforée (130) au-dessus du fond (110) et dans l'espace intérieur du panier (100), la plaque perforée (130) et le fond (110) définissant un volume (140) dans lequel peut entrer un fluide provenant d'une couche de pastilles (125) ; et
un tuyau central (145) s'étendant depuis le volume (140) et montant à travers le panier (100).

2. Panier (100) selon la revendication 1, dans lequel la partie formant surface supérieure (105) de la/des parois verticales (115) comporte un rebord (106).

3. Panier (100) selon la revendication 1 ou 2, dans lequel le fond (110) a un profil plat, conique ou elliptique.

4. Panier (100) selon l'une quelconque des revendications précédentes, dans lequel le tuyau central (145) comporte un filtre (155) dans le haut du tuyau central (145).

5. Panier (100) selon l'une quelconque des revendications précédentes, dans lequel le tuyau central (145) comporte un filtre dans le bas du tuyau central (145).

6. Panier (100) selon l'une quelconque des revendications précédentes, comprenant en outre :
au moins un croisillon de soutien (150) conçu pour soutenir le tuyau central (145), le/les croisillons de soutien (150) étant fixé(s) à une surface intérieure de la/des parois verticales (115).

7. Panier (100) selon l'une quelconque des revendications précédentes, dans lequel le tuyau central (145) comporte un tuyau d'écoulement supérieur (145a) et un tuyau d'écoulement inférieur (145b).

8. Panier (100) selon la revendication 7, comprenant en outre :
au moins un croisillon de soutien (150) conçu pour soutenir le tuyau d'écoulement inférieur (145b), le/les croisillons de soutien (150) étant fixé(s) à une surface intérieure de la/des parois verticales (115).

9. Panier selon l'une quelconque des revendications précédentes, comprenant en outre :
au moins un croisillon de soutien conçu pour soutenir la plaque perforée, le/les croisillon(s) de soutien étant au contact d'une surface supérieure du fond.

10. Panier selon l'une quelconque des revendications précédentes, dans lequel la plaque perforée est conçue pour supporter une couche de pastilles.

11. Système, comprenant :
une cuve (10) sous pression ; et
un panier (100) disposé à l'intérieur de la cuve (10) sous pression, le panier (100) comprenant :
au moins une paroi verticale (115) avec une partie formant surface supérieure (105) et une partie formant surface inférieure (160), la/les parois verticales (115) comportant au moins un trou (120) près de la partie formant surface supérieure (105) ;
un fond (110) fixé à la partie formant surface inférieure (160) de la/des parois verticales (115), le fond et la/les parois verticales (115) englobant un espace intérieur du panier (100) ;
une plaque perforée (130) au-dessus du fond (110) et dans l'espace intérieur du panier (100), la plaque perforée (130) et le fond (110) définissant un volume (140) dans lequel peut entrer un fluide provenant d'une couche de pastilles (125) ; et
un tuyau central (145) s'étendant depuis le volume (140) et montant à travers le panier (100).

12. Système selon la revendication 11, dans lequel la cuve sous pression comporte un rebord étagé et la partie formant surface supérieure de la/des parois verticales est conçue pour être au contact d'une partie étagée du rebord étagé.

13. Procédé pour charger des pastilles (125) dans le panier (100) de la revendication 1, comprenant :
l'obturation du tuyau central (145) du panier (100) ; et
le déversement de pastilles (125) autour du tuyau central (145) et dans le panier (100) pour remplir l'espace intérieur.

14. Procédé selon la revendication 13, dans lequel le tuyau central est obturé à l'aide d'un outil, l'outil comportant un entonnoir agencé de manière à guider les pastilles jusqu'au panier.

15. Procédé selon la revendication 13 ou 14, dans lequel un couvercle d'une cuve sous pression est retiré pour découvrir le panier avant l'obturation du tuyau central du panier.
